# FASCICULE DE BREVET EUROPEEN

(11) **EP 3 740 075 B1**
(45) Date de publication et mention de la délivrance du brevet: **16.03.2022**
(21) Numéro de dépôt: 19703173.5
(22) Date de dépôt: 14.01.2019
(51) Int. Cl.: A21C 9/06, A23P 20/20

(54) **TABLE DE PLIAGE ET ROULAGE POUR LA PRÉPARATION DE ROULEAUX ALIMENTAIRES**
FALT- UND ROLLTISCH FÜR DIE HERSTELLUNG VON LEBENSMITTELROLLEN
FOLDING AND ROLLING TABLE FOR MANUFACTURING FOODSTUFF ROLLS

(30) Priorité: 16.01.2018 FR 1850357
(43) Date de publication de la demande: 25.11.2020
(73) Titulaire: Bretinov, 29910 Tregunc (FR)
(72) Inventeur: AUFFRET, Pierre, 29930 PONT-AVEN (FR)
(74) Mandataire: Ipside
(86) Numéro de dépôt international: PCT/FR2019/050067
(87) Numéro de publication internationale: WO 2019/141928

(56) Documents cités:
- FR-A1- 2 701 631
- FR-A1- 2 764 875
- FR-A1- 2 909 841
- US-A- 3 912 433
- US-A- 4 913 043
- US-A- 5 640 897

## Description

La présente invention est du domaine des lignes de fabrication d'aliments tout préparés, et concerne plus particulièrement, mais non exclusivement, la fabrication des aliments conformés sensiblement en forme de tube et vise tout particulièrement la préparation des nems ou des rouleaux de printemps.

La fabrication mécanisée des aliments à partir de galettes de riz comporte plusieurs contraintes :
- les galettes de riz doivent être ramollies pour pourvoir conformer les produits dans leur forme finale ;
- la farce doit être déposée sur la ligne de fabrication ;
- en outre, différentes opérations de pliage et de roulage sont nécessaires pour parvenir au produit fini destiné à l'assiette du consommateur.

Toutes ces opérations compliquent l'automatisation des tâches réalisées au cours de la fabrication. De plus, outre la difficulté d'automatiser certaines tâches, il reste impératif de pouvoir garantir des cadences de production élevées avec très peu de pertes, à la fois sur les intrans et aussi sur les aliments obtenues.

Le pliage et le roulage des nems sont particulièrement délicats à obtenir de manière reproductible et fiable. La demande FR 2 909 841 décrit une machine pour la fabrication d'aliments feuilletés comportant une unité pour le pliage. Un double système d'aspiration et de soufflage sur un tapis de convoyage permet de plier les feuilletés. Dans cette demande la distance des buses par rapport aux feuilles du feuilleté n'est pas compatible avec le pliage des galettes de riz, étant donné que ces buses sont directement au contact des feuilles (voir le texte et les figures de FR 2 909 841). Les buses décrites dans cette demande sont donc beaucoup trop près des feuilles du feuilleté ce qui provoquerait des phénomènes d'aspiration indésirables dans le cas des galettes de riz, plutôt que le soufflage attendu. La machine de la demande FR 2 909 841 ne convient pas pour le roulage des nems, il n'y a aucun mécanisme qui soit destiné à cette étape.

La demande FR 2 701 631 décrit un appareil prévu pour le pliage et le roulage des aliments du type crêpe. La déformation des aliments plats se fait à l'aide de jets de gaz comprimés orientés dans différentes directions, et notamment par le dessous du convoyeur d'amené des ingrédients. Cet appareil ne convient pas pour le pliage des nems de par la distance des buses et leur positionnement, et également de par l'absence de dispositif d'aspiration nécessaire au maintien des galettes de riz sur le tapis. En outre, le roulage tel que décrit dans ce document est difficilement réalisable, étant donné qu'il est nécessaire de mettre en oeuvre plusieurs buses avec plusieurs orientations en sortie, comme cela est visible notamment sur la figure 4 de cette demande de brevet.

La fabrication mécanisée des rouleaux de printemps ou nems est également connue par ailleurs, de la demande de brevet FR 2 685 167 qui décrit un convoyeur intégrant des éléments pour le dépôt d'une garniture, et des bras de relevage pour le pliage d'une galette de riz, ainsi qu'une fourche pour le roulage de la galette. Les opérations de pliage et de roulage sont complexes à réaliser sans recourir à l'aide extérieure d'un opérateur, et sont peu compatibles avec la préparation des aliments suivant des cadences élevées. Cette demande explique dans sa partie introductive comment les galettes de riz doivent être ramollies avant d'être manipulées, ce qui requiert notamment la mise en oeuvre d'un ramollisseur.

US4913043 A divulgue un dispositif pour le pliage et roulage d'un morceau de pâte.

Pour pallier tout ou partie des inconvénients de l'état de la technique précité, la présente invention concerne une table de pliage et de roulage pour la préparation de rouleaux alimentaires comportant une farce insérée dans une galette de riz, tels que les nems ou les rouleaux de printemps, comprenant un tapis de convoyage et un organe de pliage comportant un système d'au moins deux buses de soufflage de gaz comprimé, placées latéralement de part et d'autre du tapis de convoyage, et un système d'aspiration positionné entre lesdites deux buses, caractérisé en ce que chacune des sorties des susdites buses est positionnée à une distance comprise entre 1 et 4,5 mm du tapis de convoyage, voire entre 2,5 et 4 mm du tapis de convoyage, et en ce que la table de pliage et de roulage comporte :
- un premier organe de roulage placé en amont de l'organe de pliage sur ledit tapis de convoyage, comprenant un moyen de maintien en pression d'une galette par une première extrémité sur ledit tapis de convoyage et un premier moyen de roulage de la galette de riz par une deuxième extrémité opposée à ladite première extrémité ;
- un deuxième organe de roulage placé en aval de l'organe de pliage sur ledit tapis de convoyage, comprenant un deuxième moyen de roulage de la galette de riz par sa deuxième extrémité.

Le gaz comprimé est de préférence de l'air, mais il peut s'agir de tout autre gaz compatible avec l'industrie alimentaire. Grâce à la table de pliage et de roulage selon la présente invention, la fabrication des nems est possible automatiquement à une cadence élevée. La position des buses est de préférence sous le plan du tapis ; les inventeurs ont mis en évidence de manière inattendue que la distance de 1 à 4,5 mm au tapis permettait le pliage très rapide (et précis) des plis de la galette de riz ramollies, selon un délai qui peut descendre au centième de seconde, sans phénomène d'aspiration, ou de collage, indésirables. Le premier organe de roulage permet de pré-rouler la galette avec la farce en formant un boudin, avant le rabat de deux plis latéralement de part et d'autre du tapis de convoyage. Le deuxième organe de roulage permet d'achever le roulage du nem, en enroulant le boudin sur les plis rabattus. L'organe de pliage et les deux organes de roulage de la table de pliage et de roulage selon l'invention, concourent ensemble à réaliser un repli de la galette de riz avec son enroulement autour de la farce, de manière rapide, fiable et avec très peu de perte de matière alimentaire. Une ligne de production dans laquelle la table selon l'invention est intégrée permet de produire des nems avec une cadence supérieure à 2000 produits par heure.

Dans le cadre de l'invention le terme « sens de défilement » correspond au sens de défilement du tapis de convoyage de la table de pliage et de roulage selon l'invention. Les susdites première et deuxième extrémités de la galette relativement au premier organe de roulage sont avantageusement positionnées sensiblement sur un axe parallèle au sens de défilement.

Dans la suite de la présente description les termes « au dessus », « en dessous », sont utilisés pour déterminer la position relative d'un objet par rapport au tapis de convoyage de la table selon l'invention en configuration d'utilisation.

Avantageusement, chacune des deux buses de soufflage propulse un jet configuré en lame de couteau, avec une pression de 3 à 4,5 bars, pendant une durée de 0,01 à 0,04 s. Les inventeurs ont découvert qu'étant donné la position des buses telles que décrites précédemment, dans le cadre de l'invention, grâce à une telle gamme de pression de jet d'air comprimé, l'éjection du produit était évité et la précision du pliage était augmentée, de manière compatible avec une cadence de fabrication élevée. Il est préférable le jet d'air pendant une durée qui doit être bien inférieure à la seconde, ce qui évite de diffuser une quantité d'air dans le milieu ambiant pouvant perturber les jets suivants. De manière avantageuse, les buses se rétrécissent au niveau de leur orifice de sortie ; de cette manière le guidage du souffle d'air est amélioré et un effet venturi est créé. La distance des galettes par rapport à la sortie de la buse est avantageusement de 3 mm, ce qui évite tous les effets de collage et d'aspiration.

Avantageusement, les buses de soufflage comportent un clapet actionné par de l'air comprimé, ou par une électrovanne, et est prévu pour basculer entre une position d'ouverture ou de l'air comprimé est distribué et une position de fermeture. De préférence, l'électrovanne comporte un électroaimant et est piloté par de l'électronique.

Avantageusement, le moyen de maintien en pression contient une mâchoire comportant deux platines crénelées positionnées en vis-à-vis, ladite mâchoire étant montée articulée sur un bras comprenant deux bielles adaptées pour modifier la position de la mâchoire entre une configuration de repos dans laquelle la mâchoire occupe une position au dessus du tapis de convoyage et une configuration de maintien en pression dans laquelle les créneaux des deux platines crénelées se compriment sur la surface du tapis de convoyage. Une telle configuration du moyen de maintien en pression est particulièrement adaptée aux galettes de riz de forme rectangulaire. Chaque platine crénelée maintien un bord de la galette rectangulaire, et le premier moyen de roulage enroule ladite galette par un coin sur les deux autres bords.

Avantageusement, le premier moyen de roulage contient un train roulant comprenant deux roues dentées montées sur un axe de rotation positionné au dessus du tapis de convoyage. La configuration des roues dentées permet une bonne accroche et une première étape de roulage, qualifiée de pré-roulage, sûr et rapide, des galettes de riz. Le pré-roulage est un roulage partiel de la galette sur deux de ces bords.

Avantageusement, l'actionnement de l'axe de rotation sur lequel sont montées les roues dentées et l'actionnement du bras comprenant les deux bielles sont pilotés pour coopérer en réalisant le pré-roulage des nems. Grâce à cette configuration, le maintien de la galette sur le tapis de convoyage est synchronisé avec le pré-roulage de la galette de riz.

Avantageusement, le deuxième moyen de roulage contient un socle intégrant au moins deux lames dentées, ledit socle étant monté pivotant sur un axe pivot positionné au dessus du tapis de convoyage. Ce moyen de roulage est ainsi configuré pour effectuer la dernière étape de roulage du nem, après le pliage par deux coins du produit, et obtenir un produit alimentaire en forme de boudin. Les lames dentées se translatent avec un léger pivotement, pour mimer les mouvements d'un opérateur qui enroule un aliment sur une table.

Avantageusement, l'organe de pliage comporte deux doigts de maintien prévu pour maintenir une galette de riz à plat sur ledit tapis de convoyage. La présence de tels doigts est particulièrement utile pour la fabrication de produit du type nems de dimension supérieur à la taille standard des nems. Afin d'éviter le collage de la galette, les buses sont positionnée latéralement par rapport aux doigts qui occupent une position plus centrée vers le centre du tapis de convoyage.

La présente invention concerne également une ligne de fabrication de rouleaux alimentaires, ou de boudin, comportant une farce insérée dans une galette de riz, comprenant :
- un distributeur de galettes de riz adapté pour distribuer des galettes de manière séquencée ;
- un ramollisseur prévu pour humidifier lesdites galettes, placé en aval du distributeur sur la ligne de fabrication ;
- un dispositif de dosage et de dépose de farce, placé en aval du ramollisseur ; et
- une table de pliage et de roulage tel que décrit précédemment dans le cadre de la présente invention.

La description détaillée qui suit présente des modes de réalisation de la présente invention, uniquement donnés à titre illustratif et qui ne doivent nullement être interprétés comme limitatifs, et leurs figures annexées parmi lesquelles :
- la figure 1 représente une vue en perspective - et plongeante sur le tapis de convoyage - d'une partie d'un mode de réalisation d'une table de pliage et de roulage selon l'invention ;
- la figure 2 représente le premier organe de roulage de la table illustrée à la figure 1 ;
- la figure 3 représente l'organe de pliage de la table illustrée à la figure 1 ;
- la figure 4 représente une vue en coupe d'une buse de soufflage de l'organe de pliage de la table selon l'invention ;
- les figure 5 et 6 représente une vue en coupe d'un détail de la buse de soufflage de la figure 4 selon deux configurations : ouverte et fermée ;
- la figure 7 représente une vue en perspective de l'organe de pliage ;
- la figure 8 représente une vue en perspective de l'organe de pliage avec des éléments supplémentaire par rapport à la figure 7 ; et
- la figure 9 représente le deuxième organe de pliage de la table selon l'invention.

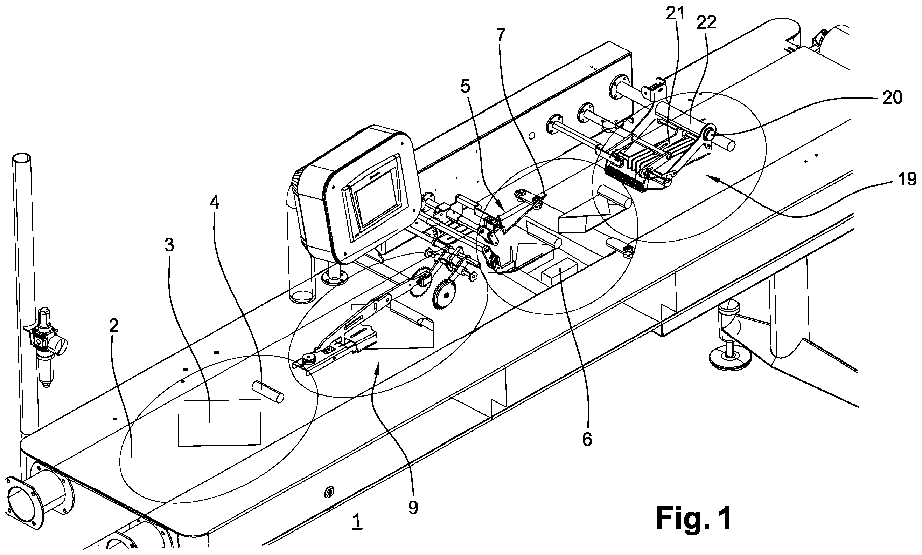

La figure 1 montre une table de roulage et de pliage 1 selon l'invention comprenant un tapis de convoyage 2 sur lequel sont convoyés des galettes de riz 3 et une farce 4 positionnée en amont, eu égard au sens de défilement. Selon un mode de réalisation, la table intègre un organe de pliage 5 comprenant deux buses 6 de soufflage d'air comprimé et deux doigts de maintien 7, placés latéralement par rapport au sens de défilement du tapis de convoyage 2. Les buses 6 de soufflage sont placées latéralement sous le tapis de convoyage 2, et les doigts de maintien 7 sont placés latéralement au dessus du tapis de convoyage 2. Un système d'aspiration 8 placé de manière centrale, sous le tapis de convoyage 2, permet de maintenir les galettes de riz 3 plaquées sur le tapis.

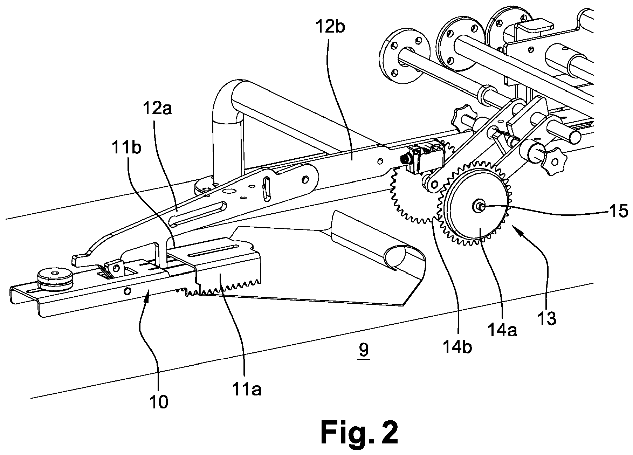

Un premier organe de roulage 9 est placé en amont de l'organe de pliage 5 sur le tapis de convoyage 2. Le premier organe de roulage 9 comprend un moyen de maintien en pression d'une galette contenant une mâchoire 10 comportant deux platines crénelées 11a et 11b positionnées en vis-à-vis, la mâchoire 10 est placée au dessus du tapis de convoyage 2. La mâchoire 10 étant montée articulée sur un bras comprenant deux bielles 12a et 12b. Le premier organe de roulage 9 comprend aussi un premier moyen de roulage 13 de la galette de riz 3, contenant un train roulant comprenant deux roues dentées 14a et 14b montées sur un axe de rotation 15 positionné au dessus du tapis de convoyage 2. La mâchoire 10 est placé en amont du premier moyen de roulage 13, relativement au sens de défilement, et doit maintenir une galette de riz 3 carrée par un de ses quatre coins sur le tapis de convoyage 2, alors que les roues dentées 14a et 14b du premier moyen de roulage enroule la galette par un autre de ses quatre coins positionné à l'opposé, c'est-à-dire sur la même diagonale du carré (ou du rectangle pour les galettes rectangulaire), comme cela est visible sur les figures 1 et 2.

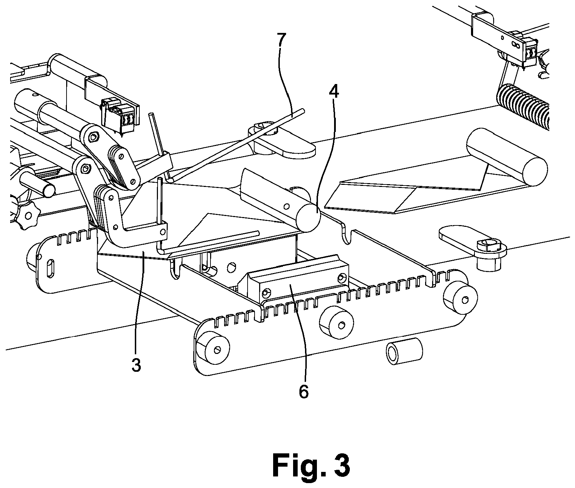

Une fois enroulée selon la première étape de pré-roulage décrite ci-dessus et illustrée à la figure 2, les galettes sont convoyées jusqu'à l'organe de pliage 5 illustré aux figure 1 et 3. Les buses de soufflages 6 qui fonctionnent sur une période de jet de 0,02 secondes toutes les 0,03 secondes, expulsent de l'air à 3,5 bars. Les jets d'airs peuvent être répétés deux, voire trois fois. La sortie des buses 6 de soufflage est positionnée sous le tapis à une distance de 3 mm du tapis de convoyage 2. Le but est de créer un choc suffisamment puissant avec un minimum d'air dans un minimum de temps pour provoquer le pliage par amenée des coins latéraux - relativement au sens de défilement - de la galette vers le centre du tapis de convoyage 2. Avec trop de pression et trop d'air, les bords de la galette seraient éjectés dans l'espace sans contrôle : c'est l'effet de choc qui est important. De plus, diffuser trop d'air dans le milieu ambiant perturbe le fonctionnement du deuxième souffle.

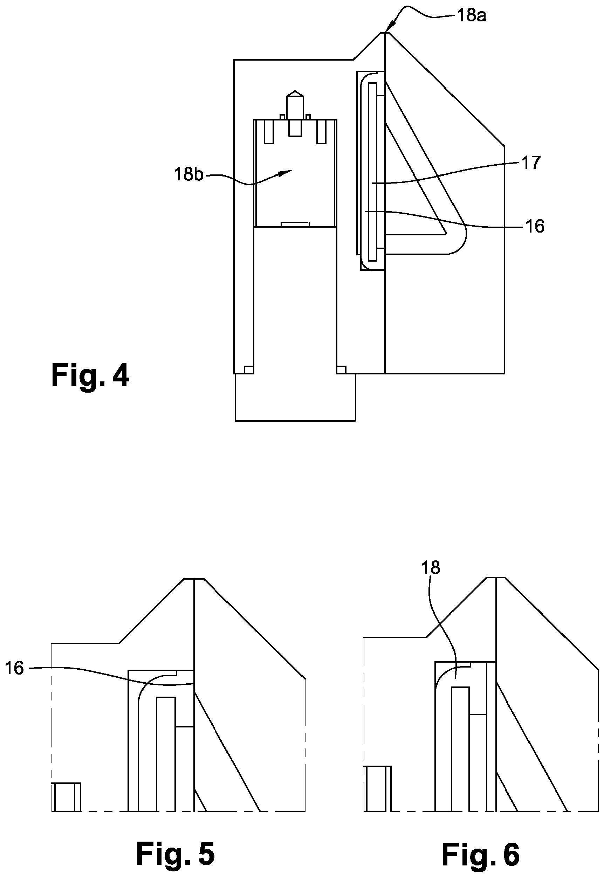

Les buses 6 utilisées sont du type de celles représentées à la figure 4 comportant un clapet 16. Une telle buse 6 comprend une réserve d'air 17 suffisamment importante pour éviter une baisse de pression lors de la distribution. Pour les buses suivant cette configuration la sortie d'air 18a est sous forme de couteau de faible épaisseur avec la longueur adaptée au produit à plier, de 150 à 220 mm de côté pour les galettes carrées, ou pour des galettes rondes de 150 à 250 mm de diamètre. La distance de distribution entre la réserve et la sortie de la buse doit être très faible. La sortie de la buse doit être effilée pour guider le souffle dans l'espace et laisser l'effet de Venturi se faire. La section de sortie (fente) est 0,01 mm, la course d'ouverture « d » de la buse est légèrement supérieure à cette fente, typiquement de 0,03 mm.

L'ouverture par basculement du clapet 16 est actionnée par de l'air comprimé ou directement par un électroaimant piloté par de l'électronique (électrovanne 18b). Ceci permet un contrôle précis et court dans la durée. Les figures 5 et 6 illustrent la buse 6 dans des configurations respectivement fermée et ouverte avec un basculement du clapet 16 selon un débattement « d ».

Selon un mode de réalisation avantageux, le pliage doit se faire en deux temps, côté droit puis côté gauche de la galette relativement au sens de défilement. Le décalage de soufflage, entre les plis latéraux droit et gauche, est de 50 mm pour éviter l'interférence des deux bandes de galettes à plier.

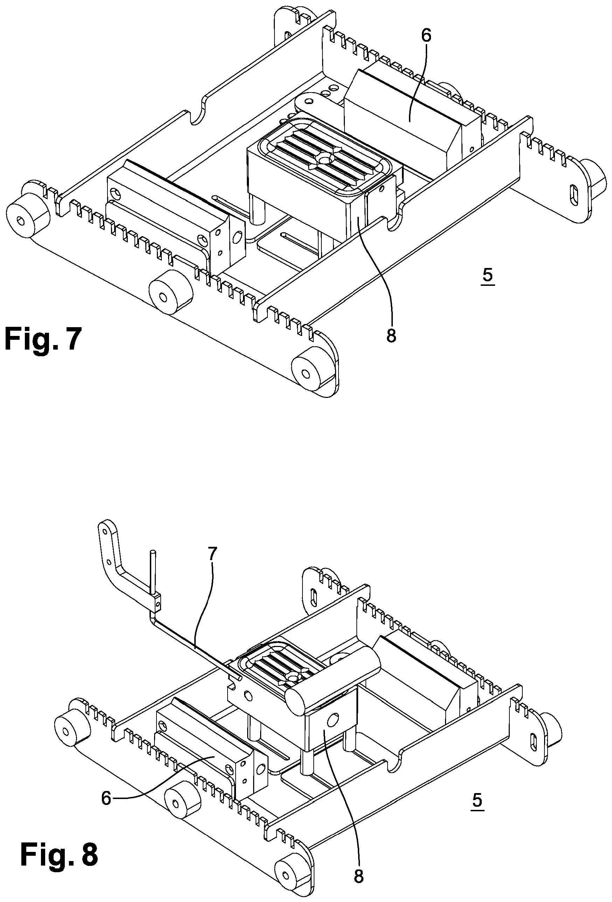

L'organe de pliage 5 est illustré en détail sur la figure 7 sans le tapis de convoyage 2 qui doit être positionné par-dessus en configuration d'utilisation. Le système d'aspiration 8 est suffisant pour faire des nems à partir de galettes de petite taille, inférieure à 150 mm de côté. Pendant le pliage par soufflage, il est nécessaire de maintenir la galette par aspiration pour former un pli régulier.

Pour réaliser des nems de plus grande taille, la présence des deux doigts de maintien 7 est préférable, ce qui permet un légier maintien de la galette par le dessus pendant le soufflage par les buses 6 de soufflage (voir la figure 8).

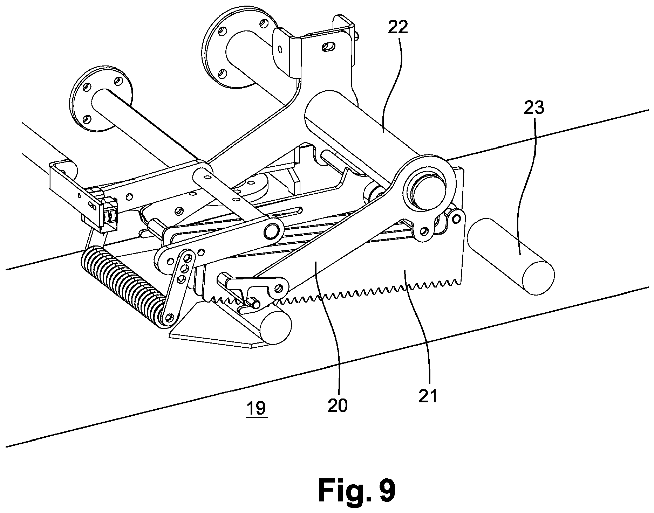

Une fois les étapes de pré-roulage et de pliage réalisées comme décrit ci-dessus, la galette est convoyée au niveau d'un deuxième organe de roulage 19 (voir la figure 9) placé en aval de l'organe de pliage 5 selon le sens de défilement. Le deuxième organe de roulage 19 comprend un deuxième moyen de roulage 20 qui contient un socle intégrant cinq lames dentées 21, ledit socle étant monté pivotant sur un axe pivot 22 positionné au dessus du tapis de convoyage 2. Ce deuxième moyen de roulage 18 permet d'effectuer la dernière étape de roulage du nem, et d'obtenir un produit alimentaire en forme de boudin 23.

## Revendications

1. Table de pliage et de roulage (1) pour la préparation de rouleaux alimentaires comportant une farce insérée dans une galette de riz, comprenant un tapis de convoyage (2) et un organe de pliage (5), ledit organe de pliage (5) comportant un système d'au moins deux buses de soufflage (6) de gaz comprimé, placées latéralement de part et d'autre du tapis de convoyage (2), et un système d'aspiration (8) positionné entre lesdites deux buses, **caractérisé en ce que** chacune des sorties des susdites buses de soufflage (6) est positionnée à une distance comprise entre 1 et 4,5 mm du tapis de convoyage (2) et **en ce que** la table de pliage et de roulage (1) comporte :
- un premier organe de roulage (9) placé en amont de l'organe de pliage (5) sur ledit tapis de convoyage (2), comprenant un moyen de maintien en pression d'une galette par une première extrémité sur ledit tapis de convoyage (2) et un premier moyen de roulage (13) de la galette de riz par une deuxième extrémité opposée à ladite première extrémité ;
- un deuxième organe de roulage (19) placé en aval de l'organe de pliage (5) sur ledit tapis de convoyage (2), comprenant un deuxième moyen de roulage (20) de la galette de riz par sa deuxième extrémité.

2. Table de pliage et de roulage (1) selon la revendication 1, dans laquelle chacune des deux buses de soufflage (6) propulse un jet configuré en lame de couteau, avec une pression de 3 à 4,5 bars, pendant une durée de 0,01 à 0,04 s.

3. Table de pliage et de roulage (1) selon l'une des revendications 1 ou 2, dans laquelle les buses de soufflage (6) comportent un clapet (16) actionné par de l'air comprimé, ou par une électrovanne, et est prévu pour basculer entre une position d'ouverture ou de l'air comprimé est distribué et une position de fermeture.

4. Table de pliage et de roulage (1) selon l'une des revendications 1 à 3, dans laquelle le moyen de maintien en pression contient une mâchoire (10) comportant deux platines crénelées (11a,11b) positionnées en vis-à-vis, ladite mâchoire (10) étant montée articulée sur un bras comprenant deux bielles (12a,12b) adaptées pour modifier la position de la mâchoire (10) entre une configuration de repos dans laquelle la mâchoire occupe une position au dessus du tapis de convoyage (2) et une configuration de maintien en pression dans laquelle les créneaux des deux platines crénelées se compriment sur la surface du tapis de convoyage (2).

5. Table de pliage et de roulage (1) selon l'une des revendications 1 à 4, dans laquelle le premier moyen de roulage (9) contient un train roulant comprenant deux roues dentées (14a,14b) montées sur un axe de rotation (15) positionné au dessus du tapis de convoyage (2).

6. Table de pliage et de roulage (1) selon les revendications 4 et 5 prises ensembles, dans laquelle l'actionnement de l'axe de rotation (15) sur lequel sont montées les roues dentées (14a, 14b) et l'actionnement du bras comprenant les deux bielles (12a, 12b) sont pilotés pour coopérer en réalisant le pré-roulage des nems.

7. Table de pliage et de roulage (1) selon l'une des revendications 1 à 6, dans laquelle le deuxième moyen de roulage (20) contient un socle intégrant au moins deux lames dentées (21), ledit socle étant monté pivotant sur un axe pivot (22) positionné au dessus du tapis de convoyage (2).

8. Table de pliage et de roulage selon l'une des revendications 1 à 7, dans laquelle l'organe de pliage (5) comporte deux doigts de maintien (7) prévu pour maintenir une galette de riz (3) à plat sur ledit tapis de convoyage (2).

9. Ligne de fabrication de rouleaux alimentaires, ou de boudin (23), comportant une farce (4) insérée dans une galette de riz (3), comprenant :
- un distributeur de galettes de riz (3) adapté pour distribuer des galettes de manière séquencée ;
- un ramollisseur prévu pour humidifier lesdites galettes, placé en aval du distributeur sur la ligne de fabrication ;
- un dispositif de dosage et de dépose de farce, placé en aval du ramollisseur ; et
- une table de pliage et de roulage selon l'une des revendications 1 à 8.

## Patentansprüche

1. Falt- und Rolltisch (1) für die Zubereitung von Essrollen, die eine Füllung umfassen, die in einem Reisfladen eingefügt ist, umfassend ein Förderband (2) und ein Faltelement (5), wobei das Faltelement (5) ein System mit wenigstens zwei Gebläsedüsen (6) für Druckgas umfasst, die seitlich auf jeder Seite des Förderbands (2) angeordnet sind, und ein Saugsystem (8), das zwischen den zwei Düsen positioniert ist, **dadurch gekennzeichnet, dass** jeder der Ausgänge der oben genannten Gebläsedüsen (6) in einem Abstand, der zwischen 1 und 4,5 mm beträgt, vom Förderband (2) positioniert ist, und dadurch, dass der Falt- und Rolltisch (1) umfasst:
- ein erstes Rollelement (9), das stromaufwärts von dem Faltelement (5) auf dem Förderband (2) angeordnet ist, umfassend ein Druckhaltemittel für einen Fladen an einem ersten Ende auf dem Förderband (2) und ein erstes Rollmittel (13) des Reisfladens an einem zweiten Ende, das dem ersten Ende gegenüberliegt;
- ein zweites Rollelement (19), das stromabwärts von dem Faltelement (5) auf dem Förderband (2) angeordnet ist, umfassend ein zweites Rollmittel (20) des Reisfladens an seinem zweiten Ende.

2. Falt- und Rolltisch (1) nach Anspruch 1, wobei jede der zwei Gebläsedüsen (6) einen als Messerklinge ausgestalteten Strahl ausstößt, mit einem Druck von 3 bis 4,5 bar, während einer Dauer von 0,01 bis 0,04 s.

3. Falt- und Rolltisch (1) nach einem der Ansprüche 1 oder 2, wobei die Gebläsedüsen (6) eine Klappe (16) umfassen, die durch Druckluft oder durch ein Magnetventil betätigt wird und vorgesehen ist, um zwischen einer Öffnungsposition, in der Druckluft verteilt wird, und einer Verschlussposition hin und her zu schalten.

4. Falt- und Rolltisch (1) nach einem der Ansprüche 1 bis 3, wobei das Druckhaltemittel eine Backe (10) enthält, die zwei gezackte Platten (11a, 11b) umfasst, die gegenüberliegend angeordnet sind, wobei die Backe (10) gelenkig auf einem Arm gelagert ist, der zwei Stangen (12a, 12b) umfasst, die angepasst sind, um die Position der Backe (10) zwischen einer Ruheausgestaltung, in der die Backe eine Position über dem Förderband (2) einnimmt, und einer Druckhalteausgestaltung, in der sich die Zacken der zwei gezackten Platten auf der Oberfläche des Förderbands (2) komprimieren, zu ändern.

5. Falt- und Rolltisch (1) nach einem der Ansprüche 1 bis 4, wobei das erste Rollmittel (9) einen Rollwagen enthält, der zwei Zahnräder (14a, 14b) umfasst, die auf einer Drehachse (15) gelagert sind, die über dem Förderband (2) positioniert ist.

6. Falt- und Rolltisch (1) nach dem Ansprüchen 4 und 5 zusammengenommen, wobei die Betätigung der Drehachse (15), auf der die Zahnräder (14a, 14b) gelagert sind, und die Betätigung des Arms, der die zwei Stangen (12a, 12b) umfasst, gesteuert werden, um beim Ausführen eines Vorrollens der Frühlingsrollen zusammenzuwirken.

7. Falt- und Rolltisch (1) nach einem der Ansprüche 1 bis 6, wobei das zweite Rollmittel (20) einen Sockel enthält, der wenigstens zwei gezahnte Klingen (21) integriert, wobei der Sockel schwenkbar auf einer Schwenkachse (22) gelagert ist, die über dem Förderband (2) positioniert ist.

8. Falt- und Rolltisch (1) nach einem der Ansprüche 1 bis 7, wobei das Faltelement (5) zwei Haltefinger (7) umfasst, die vorgesehen sind, um einen Reisfladen (3) flach auf dem Förderband (2) zu halten.

9. Linie zur Herstellung von Essrollen oder einer Wurst (23), umfassend eine Füllung (4), die in einem Reisfladen (3) eingefügt ist, umfassend:
- einen Verteiler von Reisfladen (3), der angepasst ist, um Fladen getaktet zu verteilen,
- einen Aufweicher, der vorgesehen ist, um die Fladen zu befeuchten, und der stromabwärts von dem Verteiler auf der Herstellungslinie angeordnet ist;
- eine Vorrichtung zur Dosierung und zur Ablage von Füllung, die stromabwärts von dem Aufweicher angeordnet ist; und
- einen Falt- und Rolltisch nach einem der Ansprüche 1 bis 8.

## Claims

1. Folding and rolling table (1) for preparing food rolls comprising a filling inserted into a rice wrapper, comprising a conveyor belt (2) and a folding member (5), said folding member (5) including a system of at least two nozzles (6) blowing compressed gas, placed laterally on either side of the conveyor belt (2), and a suction system (8) positioned between said two nozzles, **characterised in that** each of the outlets of the aforementioned blowing nozzles (6) is positioned at a distance of between 1 and 4.5 mm from the conveyor belt (2), and **in that** the folding and rolling table (1) includes:
- a first rolling member (9) placed upstream of the folding member (5) on said conveyor belt (2), comprising a means for maintaining a wrapper under pressure by a first end on said conveyor belt (2) and a first means (13) for rolling the rice wrapper by a second end opposite to said first end;
- a second rolling member (19) placed downstream of the folding member (5) on said conveyor belt (2), comprising a second means (20) for rolling the rice wrapper by the second end thereof.

2. Folding and rolling table (1) according to claim 1, wherein each of the two blowing nozzles (6) propels a jet configured in a knife blade, with a pressure of 3 to 4.5 bar, for a period of 0.01 to 0.04 seconds.

3. Folding and rolling table (1) according to one of claims 1 or 2, wherein the blowing nozzles (6) include a valve (16) actuated by compressed air, or by a solenoid valve, and is designed to switch between an open position wherein the compressed air is distributed and a closed position.

4. Folding and rolling table (1) according to one of claims 1 to 3, wherein the pressure maintenance means contains a jaw (10) including two crenellated plates (11a, 11b) positioned facing each other, said jaw (10) being mounted articulated on an arm comprising two linkages (12a, 12b) adapted to modify the position of a jaw (10) between an idle configuration wherein the jaw occupies a position above the conveyor belt (2) and a pressure maintenance configuration wherein the crenellations of the two crenellated plates are compressed on the surface of the conveyor belt (2).

5. Folding and rolling table (1) according to one of claims 1 to 4, wherein the first rolling means (9) contains rolling gear comprising two toothed wheels (14a, 14b) mounted on a rotation shaft (15) positioned above the conveyor belt (2).

6. Folding and rolling table (1) according to claims 4 and 5 taken together, wherein the actuation of the rotation shaft (15) whereon the toothed wheels (14a, 14b) are mounted and the actuation of the arm comprising the two linkages (12a, 12b) are controlled so as to cooperate while performing the pre-rolling of the spring rolls.

7. Folding and rolling table (1) according to one of claims 1 to 6, wherein the second rolling means (20) contains a pedestal incorporating at least two toothed blades (21), said pedestal being mounted so as to pivot on a pivot shaft (22) positioned above the conveyor belt (2) .

8. Folding and rolling table (1) according to one of claims 1 to 7, wherein the folding member (5) includes two holding fingers (7) designed to hold the rice wrapper (3) flat on said conveyor belt (2).

9. Line for manufacturing food rolls, or fingers (23), including a filling (4) inserted in a rice wrapper (3), comprising:
- a rice-wrapper dispenser (3) adapted to distribute wrappers in sequence;
- a softener designed to moisten said wrappers, placed downstream of the dispenser on the production line,
- a device for apportioning and depositing filling, placed downstream of the softener; and
- a folding and rolling table according to one of claims 1 to 8.
